# EUROPÄISCHE PATENTSCHRIFT

(11) **EP 1 725 918 B1**
(45) Veröffentlichungstag und Bekanntmachung des Hinweises auf die Patenterteilung: **24.02.2010**
(21) Anmeldenummer: 05729767.3
(22) Anmeldetag: 11.03.2005
(51) Int. Cl.: G05B 19/12

(54) **BETRIEBSVERFAHREN FUR EINE VON EINER STEUEREINRICHTUNG GESTEUERTE WERKZEUGMASCHINE**
OPERATING METHOD FOR A MACHINE TOOL CONTROLLED BY A CONTROL DEVICE
PROCEDE DE FONCTIONNEMENT POUR UNE MACHINE-OUTIL COMMANDEE PAR UN DISPOSITIF DE COMMANDE

(30) Priorität: 19.03.2004 DE 102004013615
(43) Veröffentlichungstag der Anmeldung: 29.11.2006
(73) Patentinhaber: SIEMENS AKTIENGESELLSCHAFT, 80333 München (DE)
(72) Erfinder: DOLANSKY, Stefan, 90518 Altdorf (DE); MENZEL, Thomas, 91088 Bubenreuth (DE); ROSSI, Gernot, 91245 Simmelsdorf (DE)
(86) Internationale Anmeldenummer: PCT/EP2005/051123
(87) Internationale Veröffentlichungsnummer: WO 2005/091092

(56) Entgegenhaltungen:
- US-A- 4 646 245
- US-A- 5 109 973
- US-A- 5 247 452
- US-A- 5 374 231
- US-A- 5 401 229
- US-A1- 2003 023 337

## Beschreibung

Die vorliegende Erfindung betrifft ein Betriebsverfahren für eine von einer Steuereinrichtung gesteuerte Werkzeugmaschine, wobei die Steuereinrichtung eine Schrittfolge abarbeitet.

Die vorliegende Erfindung betrifft weiterhin einen Programmdatenträger mit einem auf dem Programmdatenträger gespeicherten Betriebsprogramm zur Durchführung eines derartigen Betriebsverfahrens. Ferner betrifft sie einen Werkstückdatenträger mit einem Transponder, der mit einem Speicher in Wirkverbindung steht.

Derartige Betriebsverfahren sind allgemein bekannt. Bei ihnen wird die Steuereinrichtung in der Regel von dem Hersteller der Steuereinrichtung oder dem Hersteller der Werkzeugmaschine programmiert, um eine bestimmte Bearbeitung eines Werkstücks durchzuführen. Im Rahmen dieser Programmierung wird die Steuereinrichtung unter anderem auch parametriert, das heißt entsprechend der konkreten Konfiguration der Werkzeugmaschine spezifiziert.

Aus der WO-A-01/82009 ist bekannt, bei Holzbearbeitungsmaschinen die Werkzeuge mit Transpondern zu versehen, so dass gewährleistet werden kann, dass bestimmte Bearbeitungsvorgänge nur mit dem korrekten Werkzeug ausgeführt werden. In der WO-A-01/82009 ist auch offenbart, dass Transponder Speicher enthalten können, wobei in dem Speicher Statusinformationen gespeichert sind und die Statusinformationen nach jedem Bearbeitungsvorgang aktualisiert werden. Schließlich ist in der WO-A-01/82009 noch offenbart, dass bei einer Leiterplattenfertigung die Leiterplatte oder ein Container mit Bauelementen für die zu fertigende Leiterplatte einen Transponder aufweist, der ein Bestückungsprogramm für den Bestückungsautomaten enthält, welcher dann die Leiterplatte bestück.

Aus der US 5,109,973 A ist ein Betriebsverfahren für eine von einer Steuereinrichtung gesteuerte Werkzeugmaschine bekannt, bei dem die Steuereinrichtung eine Schrittfolge abarbeitet und im Namen der Abarbeitung der Schrittfolge mittels eines Magnetkartenlesers von einem einem Werkstück zugeordneten Werkstückdatenträger eine Bearbeitungsvorschrift zum Bearbeiten des Werkstücks ausliest und das Werkstück entsprechend bearbeitet. Der US 2003/023337 A1 ist ein ähnlicher Offenbarungsgehalt zu entnehmen.

Die Aufgabe der vorliegenden Erfindung besteht darin, ein Betriebsverfahren für eine von einer Steuereinrichtung gesteuerte Werkzeugmaschine sowie die korrespondierenden Gegenstände zu schaffen, mittels derer die Programmierung und/oder Parametrierung der Werkzeugmaschine sowie eine Betriebsüberwachung möglichst einfach realisierbar sind.

Die Aufgabe wird durch die Gegenstände der unabhängigen Ansprüche 1, 14 und 15 gelöst. Vorteilhafte Ausgestaltungen ergeben sich aus den Unteransprüchen.

Auf Grund der Merkmale, dass die Steuereinrichtung von einem dem Werkstück zugeordneten Werkstückdatenträger zumindest ein Teileprogramm ausliest und das Werkstück entsprechend dem ausgelesenen Teileprogramm bearbeitet, trägt sozusagen jedes Werkstück seine eigene Bearbeitungsanleitung mit sich. Das Werkstück kann daher - ohne vorherige entsprechende Programmierung der Werkzeugmaschine - jeder prinzipiell geeigneten Werkzeugmaschine zugeführt werden. Auf Grund des Merkmals, dass die Steuereinrichtung aus dem Werkstückdatenträger auch eine Beschreibung des Werkstücks ausliest, ist die erfindungsgemäße Vorgehensweise noch flexibler. Die ausgelesene Beschreibung umfasst hierbei insbesondere die ursprünglichen geometrischen Abmessungen des Werkstücks und/oder die aktuellen geometrischen Abmessungen des Werkstücks unmittelbar vor der Bearbeitung des Werkstücks durch die Werkzeugmaschine umfassen. Dadurch ist es insbesondere möglich, dass die Steuereinrichtung die geometrischen Abmessungen des Werkstücks im Rahmen einer Kollisionsprüfung berücksichtigt.

Wenn das Teileprogramm eine Anzahl von nacheinander auszuführenden Einzelschritten aufweist, die Steuereinrichtung vom Werkstückdatenträger auch einen dem Werkstück zugeordneten Programmzeiger ausliest, die Steuereinrichtung die Ausführung der Einzelschritte mit einem durch den Programmzeiger bestimmten Einzelschritt beginnt und die Steuereinrichtung bei Beendigung der Ausführung des Teileprogramms an den Werkstückdatenträger einen neuen Programmzeiger übermittelt, so dass der im Werkstückdatenträger hinterlegte Programmzeiger aktualisiert wird, ist es insbesondere möglich, Bearbeitungsvorgänge von Werkstücken nahezu jederzeit zu unterbrechen und zu einem späteren Zeitpunkt fortzusetzen. Die Fortsetzung der Bearbeitung kann dabei alternativ mit der gleichen oder mit einer anderen Werkzeugmaschine erfolgen.

Wenn der Werkstückdatenträger mehreren gleichartigen und gleichartig zu bearbeitenden Werkstücken zugeordnet ist und die Steuereinrichtung das Teileprogramm für alle Werkstücke nur einmal aus dem Werkstückdatenträger ausliest, ergibt sich bei einer Serienfertigung eine besonders speicher- und zeiteffiziente Vorgehensweise.

Vorzugsweise umfasst die Beschreibung des Werkstücks auch Materialangaben über das Werkstück. Denn dadurch ist es beispielsweise möglich, dass die Steuereinrichtung bei der Bearbeitung des Werkstücks die tatsächliche Leistungsaufnahme von Antrieben der Werkzeugmaschine erfasst und mit Schwellwerten vergleicht, die weitere Bearbeitung des Werkstücks einstellt und auf Werkzeugbruch erkennt, wenn die tatsächliche Leistungsaufnahme die Schwellwerte überschreitet, und mindestens einen der Schwellwerte in Abhängigkeit von den Materialangaben über das Werkstück einstellt. Auch ist es möglich, dass die Steuereinrichtung eine Bearbeitungsgeschwindigkeit, mit der sie das Werkstück bearbeitet, in Abhängigkeit von den Materialangaben einstellt.

Wenn die Steuereinrichtung aus dem Werkstückdatenträger auch eine Werkstückidentifikation ausliest, ist gewährleistet, dass das richtige Werkstück mit dem ihm zugeordneten Steuerprogramm bearbeitet wird.

Die im Werkstückdatenträger gespeicherten Daten können weiterhin eine Beschreibung einer bereits an dem Werkstück vorgenommenen Bearbeitung umfassen. Damit kann von der Steuereinrichtung die Historie des Werkstücks nachvollzogen werden, falls dies erforderlich sein sollte. Die Beschreibung der bereits vorgenommenen Bearbeitung kann beispielsweise eine Identifikation der bearbeitenden Maschine, eine Identifikation von dessen Bediener, Bearbeitungszeiten (Anfang, Ende, Dauer), Qualitätsinformationen und Ressourceninformationen enthalten. Die Qualitätsinformationen können dabei z.B. Informationen über normale vorgänge (z.B. die verwendeten Maschinen und Werkzeuge sowie Messdaten) und/oder über unnormale Vorgänge (z.B. Prozessfehler, Werkzeugbruch, außergewöhnliche Benutzereingriffe oder andere Auffälligkeiten) umfassen.

Schließlich kann die Steuereinrichtung auch eine Beschreibung eines Mindestanforderungsprofils auslesen. Anhand dieser Angaben kann die Steuereinrichtung durch vergleich mit den Möglichkeiten der Werkzeugmaschine dann entscheiden, ob es möglich ist, die gewünschte Bearbeitung auf dieser Werkzeugmaschine durchzuführen.

Wenn die Steuereinrichtung im Rahmen der Abarbeitung der Schrittfolge drahtlos von einem einer Zusatzkomponente der Werkzeugmaschine zugeordneten Komponentendatenträger Komponentendaten ausliest und im Rahmen der Abarbeitung der Schrittfolge berücksichtigt, ist das erfindungsgemäße Betriebsverfahren noch flexibler gestaltbar.

Beispielsweise ist es in diesem Fall möglich, dass die Komponentendaten geometrische Abmessungen der Zusatzkomponente beinhalten und dass die Steuereinrichtung die Komponentenabmessungen bei der Kollisionsprüfung berücksichtigt. Alternativ oder zusätzlich ist es auch möglich, dass die Komponentendaten Zustandsdaten wie z. B. Betriebsdauer, Verschleiß sowie Art und Zahl der Bearbeitungsvorgänge umfassen und dass die Steuereinrichtung aktualisierte Werte dieser Zustandsdaten nach dem Bearbeiten des Werkstücks an den Komponentendatenträger übermittelt.

Weiterhin ist es möglich, dass die Steuereinrichtung an den Komponentendatenträger auch eine Werkzeugmaschinenidentifikation und/oder eine Benutzeridentifikation übermittelt.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1: schematisch eine Geräteanordnung mit unter anderem einer Werkzeugmaschine,
- FIG 2: ein Ablaufdiagramm,
- FIG 3: den Inhalt eines Komponentendatenträgers,
- FIG 4: den Inhalt eines Werkstückdatenträgers und
- FIG 5: einen Ausschnitt von FIG 3.

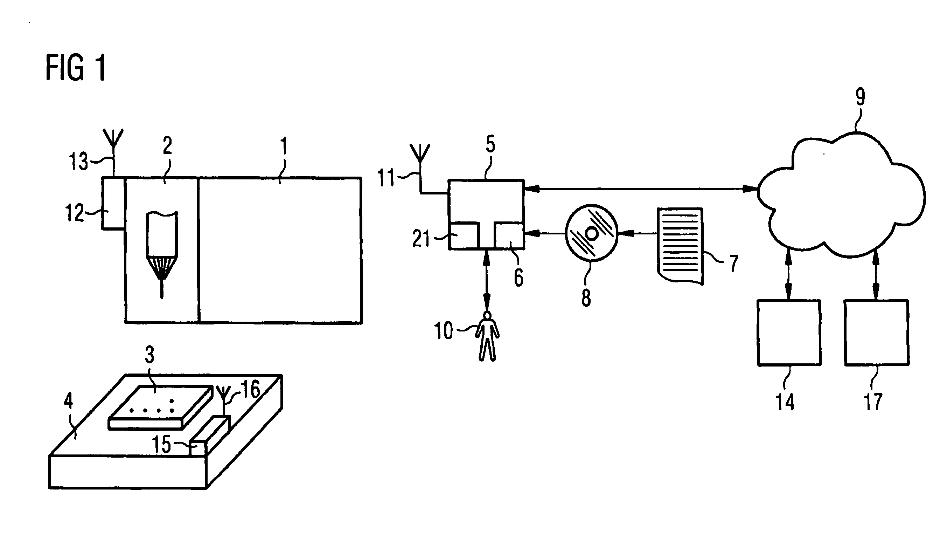

Gemäß FIG 1 weist eine Geräteanordnung unter anderem eine Werkzeugmaschine 1 auf, z.B. eine Säulenbohrmaschine 1. Die Werkzeugmaschine 1 weist mindestens eine Zusatzkomponente 2 auf, die lösbar mit der Werkzeugmaschine 1 verbunden ist, z.B. ein motorisch öffen- und schließbares Bohrfutter 2. Mittels der Werkzeugmaschine 1 und der Zusatzkomponente 2 ist ein Werkstück 3 bearbeitbar, das z.B. in einem Werkstückträger 4 gehalten ist. Auf Grund der beispielhaften Ausgestaltung der Werkzeugmaschine 1 als Säulenbohrmaschine 1 besteht die Bearbeitung im vorliegenden Fall selbstverständlich aus dem Bohren von Löchern im Werkstück 3.

Die Werkzeugmaschine 1 wird von einer Steuereinrichtung 5 gesteuert. Die Steuereinrichtung 5 ist z.B. als numerische Steuerung 5 ausgebildet. Sie weist einen Programmspeicher 6 auf, in dem ein Betriebsprogramm 7 abgespeichert ist. Das Betriebsprogramm 7 kann der Steuereinrichtung 5 dabei beispielsweise über einen Programmdatenträger 8 zugeführt worden sein, auf dem das Betriebsprogramm 7 abgespeichert ist. Ein Beispiel eines derartigen Produktdatenträgers 8 ist eine CD-ROM 8. Auch eine Ausbildung des Datenträgers 8 z.B. als Speicherkarte wäre aber möglich. Alternativ ist es auch möglich, das Betriebsprogramm 7 der Steuereinrichtung 5 über eine Rechner-Rechner-Verbindung 9 von einem anderen Rechner aus zuzuführen. Beispiele derartiger Rechner-Rechner-Verbindungen 9 sind ein lokales Rechnernetz (LAN = local area net), z.B. ein Ethernet, oder das Internet (world wide web).

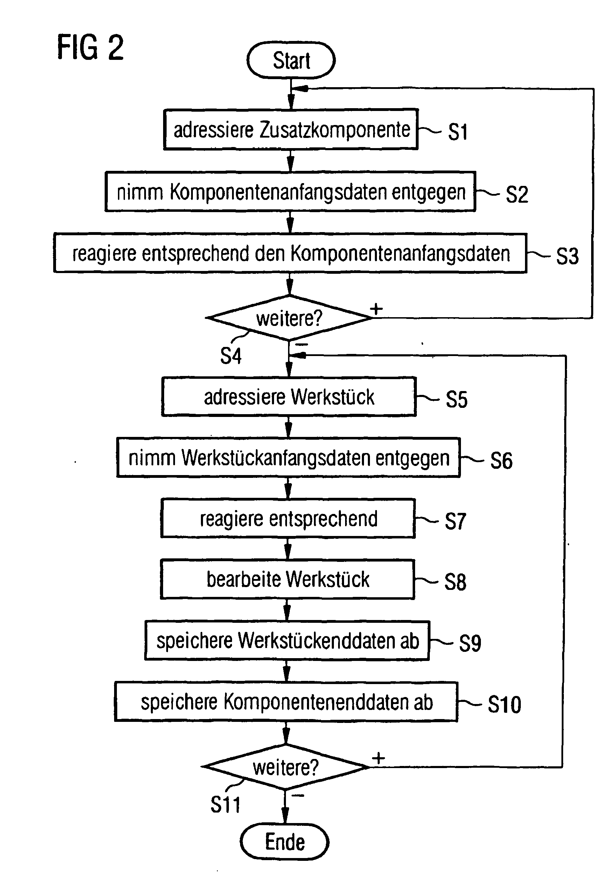

Bei Aufruf des Betriebsprogramms 7 - z.B. auf Grund einer entsprechenden Eingabe durch einen Bediener 10 - führt die Steuereinrichtung 5 ein Betriebsverfahren aus, das nachfolgend in Verbindung mit FIG 2 näher beschrieben wird.

Gemäß FIG 2 arbeitet die Steuereinrichtung im Rahmen der Ausführung des Betriebsprogramms 7 eine Schrittfolge ab, die aus Schritten S1 bis S11 besteht. Insbesondere die Schritte S3 und S7 bis S10 bestehen dabei selbst wiederum aus einer Vielzahl von Einzelschritten, die in FIG 2 aber nicht näher aufgeschlüsselt sind.

Gemäß FIG 2 adressiert die Steuereinrichtung 5 im Schritt S1 zunächst die Zusatzkomponente 2. Sie emittiert hierzu - siehe FIG 1 - über eine Antenne 11 ein Radiofrequenzsignal, das eine Sendefrequenz aufweist. Mittels des Radiofrequenzsignals wird ein Komponentendatenträger 12 von der Steuereinrichtung 5 drahtlos mit Energie versorgt. Der Komponentendatenträger 12 entnimmt die Energie also dem von der Steuereinrichtung 5 abgestrahlten Radiofrequenzsignal. Auf Grund der Entnahme der Energie aus dem von der Antenne 11 abgestrahlten Radiofrequenzsignal wird dabei zwangsweise der Komponentendatenträger 12 von der Steuereinrichtung 5 nur während der Kommunikation zwischen der Steuereinrichtung 5 und dem Komponentendatenträger 12 mit Energie versorgt.

Der Komponentendatenträger 12 ist in der Regel als Transponder 12 ausgebildet. Er ist der Zusatzkomponente 2 zugeordnet, z.B. fest und unlösbar mit dieser verbunden. Alternativ ist es auch möglich, dass der Komponentendatenträger 12 mit der Zusatzkomponente 2 lösbar verbunden ist. Die Lösbarkeit kann dabei mit oder ohne Werkzeug möglich sein. Weiterhin ist es je nach Art der Zusatzkomponente 2 - auch möglich, dass der Komponentendatenträger 12 mit der Zusatzkomponente 2 lose verbunden ist, beispielsweise über ein flexibles Band.

Auf Grund der Adressierung durch die Steuereinrichtung 5 übermittelt der Komponentendatenträger 12 an die Steuereinrichtung 5 Komponentenanfangsdaten. Die Komponentenanfangsdaten werden dabei über eine Antenne 13 des Komponentendatenträgers 12 an die Steuereinrichtung 5 übermittelt. Auch die Übermittlung der Komponentenanfangsdaten erfolgt also drahtlos.

Der Komponentendatenträger 12 sendet die Komponentenanfangsdaten auf einer - aus Sicht der Steuereinrichtung 5 - Empfangsfrequenz. Er moduliert hierzu das von ihm ausgesendete Radiofrequenzsignal. Die Steuereinrichtung 5 nimmt die übermittelten Daten im Schritt S2 entgegen.

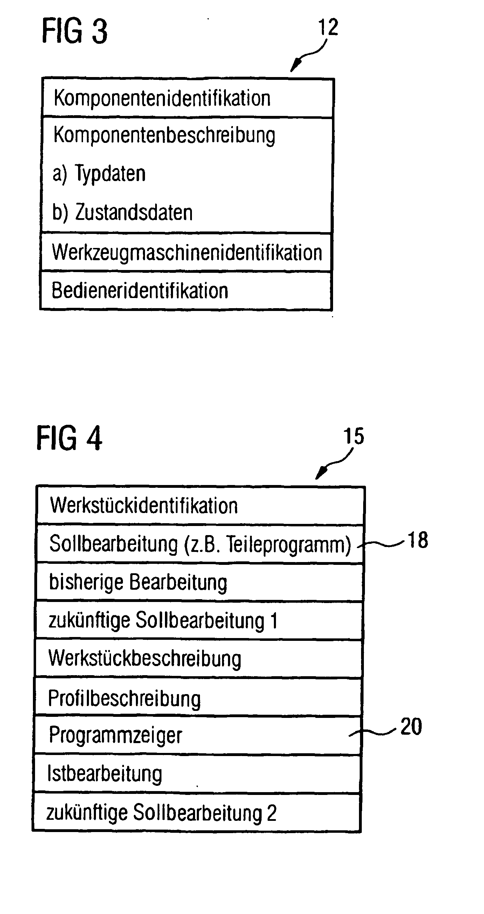

Die Komponentenanfangsdaten können - siehe FIG 3 - verschiedene Daten umfassen. Vorzugsweise umfassen sie zumindest eine Komponentenidentifikation, mittels derer die Zusatzkomponente 2 von allen anderen Zusatzkomponenten - auch baugleichen Zusatzkomponenten - unterscheidbar ist. Weiterhin umfassen sie vorzugsweise auch eine Komponentenbeschreibung.

Die Komponentenbeschreibung umfasst - siehe wieder FIG 3 - vorzugsweise Typdaten und Zustandsdaten. Die Typdaten sind die Bauartdaten der Zusatzkomponente 2, z.B. deren geometrische Abmessungen, der minimale und der maximale Durchmesser eines in das Bohrfutter 2 einsetzbaren Bohrers und dergleichen mehr. Die Zustandsdaten können z.B. den momentanen Zustand der Zusatzkomponente 2 umfassen, beispielsweise ob ein Bohrer in das Bohrfutter 2 eingesetzt ist oder nicht, welche momentane Öffnungsweite das Bohrfutter 2 aufweist usw. Weiterhin können die Zustandsdaten auch die Betriebshistorie der Zusatzkomponente 2 umfassen, z.B. die Anzahl an Betriebsstunden, den Zeitpunkt der letzten Wartung, Verschleißangaben oder z.B. auch die Art und Anzahl der mit der jeweiligen Zusatzkomponente 2 ausgeführten Bearbeitungsvorgänge.

Nach Entgegennahme der Komponentenanfangsdaten reagiert die Steuereinrichtung 5 im Schritt S3 entsprechend. Vorzugsweise parametriert sich die Steuereinrichtung 5 im Schritt S3 direkt entsprechend den übermittelten Komponentenanfangsdaten selbst.

Die Steuereinrichtung 5 berücksichtigt somit die übermittelten Komponentenanfangsdaten im Rahmen der weiteren Abarbeitung der Schrittfolge dadurch, dass die Steuereinrichtung 5 sich entsprechend der konkreten Komponentenanfangsdaten parametriert und diese Parametrierung bei der Abarbeitung der Schrittfolge, insbesondere im Rahmen der Schritte S7 und S8, entsprechend berücksichtigt.

Es ist möglich, dass außer der Zusatzkomponente 2 noch weitere Zusatzkomponenten vorhanden sind. Nach dem Ausführen des Schrittes S3 prüft die Steuereinrichtung 5 daher im Schritt S4, ob noch weitere Zusatzkomponenten vorhanden sein könnten. Wenn dies der Fall ist, geht sie zurück zum Schritt S1. Anderenfalls wird die Abarbeitung der Schrittfolge mit dem Schritt S5 fortgesetzt.

Zur gezielten Adressierung jeweils nur einer Zusatzkomponente 2 sind dabei zwei Vorgehensweisen möglich, die wahlweise alternativ oder kumulativ eingesetzt werden können. Zum einen ist es möglich, die einzelnen Zusatzkomponenten 2 über voneinander verschiedene Sendefrequenzen zu adressieren. Zum anderen ist es möglich, die - gegebenenfalls jeweilige - Sendefrequenz auf Seiten der Steuereinrichtung 5 zu modulieren, so dass die Zusatzkomponenten 2 anhand der Modulation erkennen können, ob sie angesprochen sind oder nicht.

Im Schritt S5 adressiert die Steuereinrichtung 5 einen Werkstückdatenträger 15. Sie emittiert hierzu - siehe wieder FIG 1 - über die Antenne 11 ein Radiofrequenzsignal mit einer Sendefrequenz. Die Sendefrequenz kann dabei dieselbe Sendefrequenz sein, die zum Adressieren der Zusatzkomponente 2 verwendet wird. Vorzugsweise aber ist sie von der Sendefrequenz zum Adressieren des Komponentendatenträgers 12 verschieden.

Mittels des nunmehr emittierten Signals wird der Werkstückdatenträger 15 von der Steuereinrichtung 5 drahtlos mit Energie versorgt. Die Versorgung mit Energie erfolgt also nur während der Kommunikation zwischen der Steuereinrichtung 5 und dem Werkstückdatenträger 15. Der Werkstückdatenträger 15 entnimmt die Energie dabei dem Sendesignal der Antenne 11.

Der Werkstückdatenträger 15 ist - ebenso wie der Komponentendatenträger 12 - vorzugsweise als Transponder ausgebildet. Er ist dem Werkstück 3 zugeordnet. Er kann dabei alternativ am Werkstück 3 selbst oder am Werkstückträger 4 oder auch an einer anderen Transporteinheit für das Werkstück 3 angeordnet sein, z.B. einer Palette. Er kann lösbar oder unlösbar an seiner ihn mechanisch tragenden Komponente angeordnet sein. Bei lösbarer Anbringung kann diese mit oder ohne Werkzeug lösbar sein. Auch eine lose Verbindung, z.B. über ein flexibles Band, ist wieder möglich.

Auf Grund der Adressierung durch die Steuereinrichtung 5 übermittelt der Werkstückdatenträger 15 Werkstückanfangsdaten an die Steuereinrichtung 5. Die Werkstückanfangsdaten werden dabei über eine Antenne 16 des Werkstückdatenträgers an die Steuereinrichtung 5 übermittelt. Die Steuereinrichtung 5 nimmt die übermittelten Werkstückanfangsdaten im Schritt S6 entgegen.

Der Werkstückdatenträger 15 sendet die Werkstückanfangsdaten auf einer - wieder aus Sicht der Steuereinrichtung 5 - Empfangsfrequenz. Die Empfangsfrequenz kann wieder mit der Empfangsfrequenz für die Datenübertragung von dem Komponentendatenträger 12 zur Steuereinrichtung 5 identisch sein. Vorzugsweise aber ist sie von dieser Frequenz verschieden.

Der Werkstückdatenträger 15 moduliert zur Datenübertragung das von ihm ausgesendete Radiofrequenzsignal, so dass die Steuereinrichtung 6 durch entsprechendes Demodulieren die übermittelten Daten entgegen nehmen kann.

Wie bereits erwähnt, ist es möglich, dass der Werkstückdatenträger 15 auf der gleichen Sendefrequenz adressiert wird wie der bzw. die Komponentendatenträger 12. In diesem Fall ist es erforderlich, auch das von der Steuereinrichtung 5 emittierte Sendesignal entsprechend zu modulieren, damit gezielt der Werkstückdatenträger 15 angesprochen werden kann.

Die Werkstückanfangsdaten können - siehe FIG 4 - analog zu den Komponentenanfangsdaten verschiedene Daten umfassen. Zumindest sollten sie aber eine Werkstückidentifikation umfassen, also eine Identifikation, anhand derer das jeweilige Werkstück 3 von anderen - auch gleichen - Werkstücken unterschieden werden kann.

Weiterhin können die Werkstückanfangsdaten eine Beschreibung eines Mindestanforderungsprofils an die Werkzeugmaschine 1 umfassen. Anhand dieses Mindestanforderungsprofils ist die Steuereinrichtung 5 dann in der Lage, selbsttätig zu prüfen, ob die Werkzeugmaschine 1 die gewünschte Bearbeitung überhaupt ausführen kann. Das Mindestanforderungsprofil kann z.B. umfassen, dass die Bohrlöcher in der Ebene verteilt gebohrt werden sollen, also eine zweidimensionale Positionierbarkeit des Bohrfutters 2 erforderlich ist. Je nach Möglichkeiten der Werkzeugmaschine 1, ob diese z.B. das Bohrfutter 2 nur eindimensional oder zweidimensional positionieren kann, kann die Steuereinrichtung 5 daher die Bearbeitung des Werkstücks 3 aufnehmen oder - unter Abgabe einer entsprechenden Meldung an den Bediener 10 - verweigern.

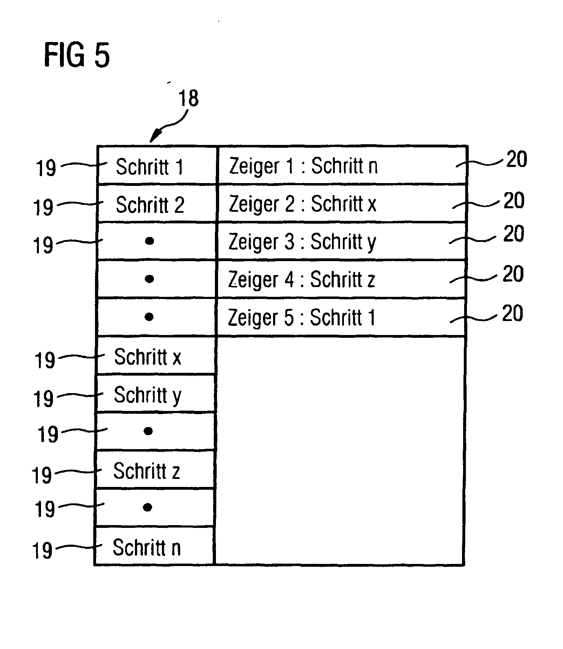

Weiterhin können die Werkstückanfangsdaten beispielsweise eine Beschreibung einer von der Werkzeugmaschine 1 auszuführenden Sollbearbeitung des Werkstücks 3 umfassen. Ein Beispiel einer derartigen Sollbearbeitung ist ein Teileprogramm 18 gemäß DIN 66025. Ein solches Teileprogramm 18 weist selbstverständlich - siehe FIG 5 - eine Anzahl von Einzelschritten 19 auf, die zur ordnungsgemäßen Bearbeitung des Werkstücks 3 von der Steuereinrichtung 5 nacheinander ausgeführt werden müssen. In diesem Fall ist somit sozusagen jedem Werkstück 3 seine eigene Bearbeitungsanweisung direkt und unmittelbar zugeordnet.

Die Beschreibung der Sollbearbeitung kann weitere Angaben umfassen, beispielsweise Angaben über Bearbeitungszeiten, eine gewünschte Bearbeitungsqualität und Einsatz von Ressourcen, beispielsweise Wasserkühlung beim Bohren.

Vorzugsweise umfassen die von der Steuereinrichtung 5 ausgegebenen Werkstückanfangsdaten auch einen Programmzeiger 20. Der Programmzeiger 20 zeigt beim Auslesen auf den als nächstes auszuführenden Einzelschritt 19. Die Steuereinrichtung 5 beginnt somit die Ausführung des Teileprogramms 18 mit dem Einzelschritt 19, der durch den Programmzeiger 20 bestimmt ist.

Während der Ausführung des Teileprogramms 18 führt die Steuereinrichtung 5 intern einen Programmzeiger 21 nach. Der Programmzeiger 21 zeigt jeweils auf den momentan ausgeführten Einzelschritt 19. Wenn die Steuereinrichtung 5 die Ausführung des Teileprogramms 18 beendet, übermittelt sie den Wert ihres internen Programmzeigers 21 an den Werkstückdatenträger 15. Dieser kann somit den Programmzeiger 20 aktualisieren.

Wie aus FIG 5 weiter ersichtlich ist, enthält der Speicher des Werkstückdatenträgers 15 zwar nur ein einziges Teileprogramm 18, aber mehrere Programmzeiger 20. Dies hat seinen Grund darin, dass der Werkstückdatenträger 15 mehreren Werkstücken 3 zugeordnet sein kann, wobei die Werkstücke 3 alle gleichartig sind und gleichartig bearbeitet werden sollen. In einem derartigen Fall muss das Teileprogramm 18 daher nur einmal vorhanden sein und auch nur einmal aus dem Werkstückdatenträger 15 ausgelesen werden. Die Programmzeiger 20 sind individuell jeweils einem einzigen Werkstück 3 proprietär zugeordnet. Denn die Werkstücke 3 werden von der Werkzeugmaschine 1 auch unabhängig voneinander bearbeitet. Meist erfolgt die Bearbeitung sequenziell.

Auch ist es möglich, dass die Werkstückanfangsdaten eine Beschreibung einer Bearbeitung umfassen, die bereits an dem Werkstück 3 vorgenommen wurde. Diese Angaben können insbesondere eine Werkzeugmaschinenidentifikation, eine Bedieneridentifikation, Bearbeitungszeiten (Anfang, Ende, Dauer), Qualitätsinformationen und Ressourceninformationen umfassen. Die Historie des Werkstücks 3 ist in diesem Fall also ebenfalls der Steuereinrichtung 5 bekannt gemacht.

Ferner können die Werkstückanfangsdaten eine Beschreibung einer weiteren Sollbearbeitung umfassen, die nach der Bearbeitung durch die Werkzeugmaschine 1 von einer anderen Einrichtung an dem Werkstück 3 vorgenommen werden soll. Auch diese Angaben können wieder Bearbeitungszeiten, eine gewünschte Bearbeitungsqualität und gewünschte einzusetzende Ressourcen umfassen.

Schließlich können die Werkstückanfangsdaten auch eine Beschreibung des Werkstücks 3 vor der Bearbeitung durch die Werkzeugmaschine 1 umfassen. Beispielsweise können CAD-Daten übermittelt werden, welche die geometrischen Abmessungen des Werkstücks 3 beschreiben. Vorzugsweise umfasst die ausgelesene Werkstückbeschreibung sowohl ursprüngliche Abmessungen des Werkstücks 3 als auch aktuelle Abmessungen des Werkstücks 3 unmittelbar vor der Bearbeitung des Werkstücks 3 durch die Werkzeugmaschine 1. Denn dann können die ursprünglichen und/ oder die aktuellen geometrischen Abmessungen des Werkstücks 3 von der Steuereinrichtung 5 insbesondere im Rahmen einer Kollisionsprüfung berücksichtigt werden. Soweit die - siehe oben - aus dem Komponentendatenträger 12 ausgelesenen Daten geometrische Abmessungen der Zusatzkomponente 2 umfassen, werden selbstverständlich auch diese Daten bei der Kollisionsprüfung mit berücksichtigt.

Die aktuellen Abmessungen des Werkstücks 3 können sich - je nach Art und Umfang der Bearbeitung des Werkstücks 3 durch die Werkzeugmaschine 1 - ändern. Soweit erforderlich, übermittelt die Steuereinrichtung 5 daher bei Beendigung der Bearbeitung des Werkstücks 3 aktualisierte Abmessungen an den Werkstückdatenträger 15.

Die Beschreibung des Werkstücks 3 kann weiterhin auch Materialangaben (Holz, Kupfer, Aluminium, Stahl, Härtegrad usw.) umfassen. Die Steuereinrichtung 5 kann diese Angaben beispielsweise dazu heranziehen, eine Bearbeitungsgeschwindigkeit, mit der die Werkzeugmaschine 1 das Werkstück 3 bearbeitet, in Abhängigkeit von den Materialangaben einzustellen.

Bei der normalen Bearbeitung des Werkstücks 3 durch die Werkzeugmaschine 1 weisen die Antriebe der Werkzeugmaschine 1 einen im Wesentlichen vorbestimmbaren Energieverbrauch auf. Bei einem Werkzeugbruch hingegen steigt der Energieverbrauch (bzw. die Leistungsaufnahme) der korrespondierenden Antriebe stark an. Die Steuereinrichtung 5 kann daher die tatsächliche Leistungsaufnahme der Antriebe der Werkzeugmaschine 1 erfassen und mit geeignet bestimmten Schwellwerten vergleichen. Übersteigt die tatsächliche Leistungsaufnahme der Antriebe die Schwellwerte, erkennt die Steuereinrichtung 5 auf Werkzeugbruch. Sie kann in diesem Fall die weitere Bearbeitung des Werkstücks 3 einstellen.

Die Leistungsaufnahme der Antriebe bei der normalen Bearbeitung des Werkstücks 3 - also ohne Werkzeugbruch - hängt in starkem Umfang von dem Material des Werkstücks 3 ab. Vorzugsweise stellt die Steuereinrichtung 5 die Schwellwerte daher in Abhängigkeit von den aus dem Werkstückdatenträger 15 ausgelesenen Materialangaben ein.

Auf Grund der übermittelten Werkstückanfangsdaten ist die Steuereinrichtung 5 in der Lage, diese Daten im Rahmen der weiteren Abarbeitung der Schrittfolge zu berücksichtigen. Dabei berücksichtigt die Steuereinrichtung 5 in den Schritten S7 und S8 die Werkstückanfangsdaten als solche, insbesondere bei der Bearbeitung des Werkstücks im Schritt S8.

Nach der Ausführung des Schrittes S7 - und bei Bearbeitung des Werkstücks 3 durch die Werkzeugmaschine 1 im Schritt S8 auch des Schrittes S8 - wird der Schritt S9 ausgeführt. Im Schritt S9 werden Ergebnisse der Bearbeitung des Werkstücks 3, soweit sie auf das Werkstück 3 bezogen sind, gespeichert. Hierzu werden sie im Schritt S9 drahtlos als Werkstückenddaten an den Werkstückdatenträger 15 übermittelt. Die Übermittlung an den Werkstückdatenträger 15 erfolgt dabei völlig analog zur Übermittlung der Werkstückanfangsdaten in den Schritten S5 und S6.

Die Werkstückenddaten können - siehe insbesondere FIG 4 - wieder verschiedene Daten umfassen. Vorzugsweise umfassen sie zumindest eine Beschreibung der von der Werkzeugmaschine 1 an dem Werkstück 3 tatsächlich ausgeführten Bearbeitung. Die Beschreibung kann beispielsweise Bearbeitungszeiten (Anfang, Ende, Dauer), die Werkzeugmaschinenidentifikation, die Bedieneridentifikation, Bedienereingriffe beim Bearbeiten des Werkstücks 3, Qualitätsangaben und Ressourceninformationen umfassen.

Vorzugsweise umfassen die Werkstückenddaten auch eine Beschreibung einer noch vorzunehmenden Sollbearbeitung des Werkstücks 3, die von einer anderen Einrichtung als der Werkzeugmaschine 1 durchzuführen ist. Diese Beschreibung kann beispielsweise wieder Bearbeitungszeiten, Qualitätsangaben und Ressourceninformationen enthalten.

In analoger Weise werden nach dem Schritt S9 im Schritt S10 Ergebnisse der Bearbeitung des Werkstücks 3, soweit sie auf die Zusatzkomponente 2 bezogen sind, gespeichert. Die Übermittlung an den Komponentendatenträger 12 erfolgt selbstverständlich wieder drahtlos.

Die Komponentenenddaten umfassen vorzugsweise auch eine Werkzeugmaschinenidentifikation und eine Bedieneridentifikation. Weiterhin können sie Zustandsdaten der Zusatzkomponente 2, beispielsweise deren Einstellung, deren Betriebsdauer, Angaben über Art und Anzahl der mit der Zusatzkomponente 2 ausgeführten Bearbeitungsvorgänge, Verschleißangaben sowie eventuelle besondere Angaben wie beispielsweise Überhitzung usw. enthalten.

Nach dem Schritt S10 wird schließlich noch im Schritt S11 abgefragt, ob ein weiteres Werkstück 3 zur Bearbeitung ansteht. Wenn ja, wird zum Schritt S5 zurückgesprungen, anderenfalls ist die Abarbeitung der Schrittfolge beendet.

Mittels der erfindungsgemäßen Betriebsweise der Werkzeugmaschine 1 wird somit auf einfache Weise ein sehr flexibler Betrieb der Werkzeugmaschine 1 gewährleistet, der individuell auf die Zusatzkomponente 2 und das Werkstück 3 zugeschnitten sein kann.

## Patentansprüche

1. Betriebsverfahren für eine von einer Steuereinrichtung (5) gesteuerte Werkzeugmaschine (1),
- wobei die Steuereinrichtung (5) eine Schrittfolge (S1 - S11) abarbeitet und im Rahmen der Abarbeitung der Schrittfolge (S1 - S11) drahtlos von einen einem Werkstück (3) zugeordneten Werkstückdatenträger (15) zumindest ein Teileprogramm (18) und eine Beschreibung des Werkstücks (3) ausliest
- wobei die Beschreibung die ursprünglichen geometrischen Abmessungen des Werkstücks und/oder die aktuellen geometrischen Abmessungen des Werkstücks (3) unmittelbar vor der Bearbeitung des Werkstücks (3) durch die Werkzeugmaschine (1) umfasst,
- wobei die Steuereinrichtung (5) das Werkstück (3) entsprechend dem ausgelesenen Teileprogramm (18) bearbeitet.

2. Betriebsverfahren nach Anspruch 1,
**dadurch gekennzeichnet, dass** das Teileprogramm (18) eine Anzahl von nacheinander auszuführenden Einzelschritten (19) aufweist, dass die Steuereinrichtung (5) vom Werkstückdatenträger (15) auch einen dem Werkstück (3) zugeordneten Programmzeiger (20) ausliest, dass die Steuereinrichtung (5) die Ausführung des Teileprogramms (18) mit einem durch den Programmzeiger (20) bestimmten Einzelschritt (19) beginnt und dass die Steuereinrichtung (5) bei Beendigung der Ausführung des Teileprogramms (18) an den Werkstückdatenträger (15) einen neuen Programmzeiger übermittelt, so dass der im Werkstückdatenträger (15) hinterlegte Programmzeiger (20) aktualisiert wird.

3. Betriebsverfahren nach Anspruch 2,
**dadurch gekennzeichnet , dass** der Werkstückdatenträger (15) mehreren gleichartigen und gleichartig zu bearbeitenden Werkstücken (3) zugeordnet ist und dass die Steuereinrichtung (5) das Teileprogramm (18) für alle Werkstücke (3) nur einmal aus dem Werkstückdatenträger (15) ausliest.

4. Betriebsverfahren nach Anspruch 1, 2 oder 3,
**dadurch gekennzeichnet , dass** die Steuereinrichtung (5) die geometrischen Abmessungen des Werkstücks (3) im Rahmen einer Kollisionsprüfung berücksichtigt.

5. Betriebsverfahren nach einem der obigen Ansprüche,
**dadurch gekennzeichnet , dass** die Beschreibung des Werkstücks (3) auch Materialangaben über das Werkstück (3) umfasst.

6. Betriebsverfahren nach Anspruch 5,
**dadurch gekennzeichnet , dass** die Steuereinrichtung (5) bei der Bearbeitung des Werkstücks (3) die tatsächliche Leistungsaufnahme von Antrieben der Werkzeugmaschine (1) erfasst und mit Schwellwerten vergleicht, dass die Steuereinrichtung (5) die weitere Bearbeitung des Werkstücks (3) einstellt und auf Werkzeugbruch erkennt, wenn die tatsächliche Leistungsaufnahme die Schwellwerte überschreitet, und dass die Steuereinrichtung (5) mindestens einen der Schwellwerte in Abhängigkeit von den Materialangaben über das Werkstück (3) einstellt.

7. Betriebsverfahren nach Anspruch 5 oder 6,
**dadurch gekennzeichnet , dass** die Steuereinrichtung (5) eine Bearbeitungsgeschwindigkeit, mit der sie das Werkstück (3) bearbeitet, in Abhängigkeit von den Materialangaben einstellt.

8. Betriebsverfahren nach einem der obigen Ansprüche,
**dadurch gekennzeichnet , dass** die Steuereinrichtung (5) aus dem Werkstückdatenträger (15) auch eine Werkstückidentifikation ausliest.

9. Betriebsverfahren nach einem der obigen Ansprüche,
**dadurch gekennzeichnet, dass** die Steuereinrichtung (5) aus dem Werkstückdatenträger (15) eine Beschreibung eines Mindestanforderungsprofils ausliest, dass die Steuereinrichtung (5) das Mindestanforderungsprofil mit den Möglichkeiten der Werkzeugmaschine (1) vergleicht und dass die Steuereinrichtung (5) die Bearbeitung des Werkstücks (3) nur dann aufnimmt, wenn die Möglichkeiten der Werkzeugmaschine (1) dem Mindestanforderungsprofil entsprechen.

10. Betriebsverfahren nach einem der obigen Ansprüche,
**dadurch gekennzeichnet , dass** die Steuereinrichtung (5) im Rahmen der Abarbeitung der Schrittfolge (S1 - S11) drahtlos von einem einer Zusatzkomponente (2) der Werkzeugmaschine (1) zugeordneten Komponentendatenträger (12) Komponentendaten ausliest und im Rahmen der Abarbeitung der Schrittfolge (S1 - S11) berücksichtigt.

11. Betriebsverfahren nach Anspruch 10,
**dadurch gekennzeichnet , dass** die Komponentendaten geometrische Abmessungen der Zusatzkomponente (2) beinhalten und dass die Steuereinrichtung (5) die Abmessungen der Zusatzkomponente (2) bei einer Kollisionsprüfung berücksichtigt.

12. Betriebsverfahren nach Anspruch 10 oder 11,
**dadurch gekennzeichnet , dass** die Komponentendaten Zustandsdaten wie z. B. Betriebsdauer, Verschleiß sowie Art und Anzahl der Bearbeitungsvorgänge umfassen und dass die Steuereinrichtung (5) nach dem Bearbeiten des Werkstücks (3) aktualisierte Werte dieser Zusatzdaten an den Komponentendatenträger (12) übermittelt.

13. Betriebsverfahren nach Anspruch 10, 11 oder 12,
**dadurch gekennzeichnet , dass** die Steuereinrichtung (5) an den Komponentendatenträger (12) auch eine Werkzeugmaschinenidentifikation und/oder eine Benutzeridentifikation übermittelt.

14. Programmdatenträger mit einem auf dem Programmdatenträger gespeicherten Betriebsprogramm (7) zur Durchführung eines Betriebsverfahrens nach einem der obigen Ansprüche.

15. Einem Werkstück (3) zugeordneter Werkstückdatenträger, in dem ein Teileprogramm (18) zur Bearbeitung des Werkstücks (3) sowie eine Beschreibung des Werkstücks (3) hinterlegt sind, wobei die Beschreibung die ursprünglichen geometrischen Abmessungen des Werkstücks (3) und/oder die aktuellen geometrischen Abmessungen des Werkstücks (3) unmittelbar vor der Bearbeitung des Werkstücks (3) durch die Werkzeugmaschine (1) umfasst, und wobei der Werkstückdatenträger angepasst ist, an eine Steuereinrichtung (5) drahtlos das Teileprogramm und die Beschreibung des Werkstücks (3) zu kommunizieren.

16. Werkstückdatenträger nach Anspruch 15,
**dadurch gekennzeichnet , dass** das Teileprogramm (18) eine Anzahl von nacheinander auszuführenden Einzelschritten (19) aufweist und dass im Werkstückdatenträger auch ein Programmzeiger (20) hinterlegt ist, der einen der Einzelschritte (19) markiert.

## Claims

1. Operating method for a machine tool (1) controlled by a control device (5),
- the control device (5) processing a step sequence (S1-11) and, during processing of the step sequence (S1-11), wirelessly reading out at least one part program (18) and a description of the workpiece (3) from a workpiece data carrier (15) assigned to a workpiece (3)
- the description including the original geometric dimensions of the workpiece (3) and/or the current geometric dimensions of the workpiece (3) immediately prior to machining of the workpiece (3) by the machine tool (1),
- the control device (5) machining the workpiece (3) in accordance with the part program (18) read out.

2. Operating method according to Claim 1, **characterized in that** the part program (18) has a number of individual steps (19) to be sequentially executed, **in that** the control device (5) also reads out from the workpiece data carrier (15) a program pointer (20) assigned to the workpiece (3), **in that** the control device (5) begins executing the part program (18) with an individual step (19) indicated by the program pointer (20), and **in that**, on ending execution of the part program (18), the control device (5) transmits a new program pointer to the workpiece data carrier (15) so that the program pointer (20) stored in the workpiece data carrier (15) is updated.

3. Operating method according to Claim 2, **characterized in that** a plurality of identical workpieces (3) that are to be machined identically are assigned to the workpiece data carrier (15), and **in that** the control device (5) reads out the part program (18) for all workpieces (3) only once from the workpiece data carrier (15).

4. Operating method according to Claim 1, 2 or 3, **characterized in that** the control device (5) takes account of the geometric dimensions of the workpiece (3) as part of a collision check.

5. Operating method according to one of the above claims, **characterized in that** the description of the workpiece (3) also includes information about the workpiece (3) material.

6. Operating method according to Claim 5, **characterized in that** the control device (5) measures the actual power input of drives of the machine tool (1) during workpiece (3) machining and compares it with threshold values, **in that** the control device (5) adjusts the further machining of the workpiece (3) and detects tool breakage if the actual power input exceeds the threshold values, and **in that** the control device (5) adjusts at least one of the threshold values depending on the information about the workpiece (3) material.

7. Operating method according to Claim 5 or 6, **characterized in that** the control device (5) adjusts a machining rate at which it machines the workpiece (3) depending on the material information.

8. Operating method according to one of the above claims, **characterized in that** the control device (5) also reads out a workpiece identifier from the workpiece data carrier (15).

9. Operating method according to one of the above claims, **characterized in that** the control device (5) reads out a description of a minimum requirements profile from the workpiece data carrier (15), **in that** the control device (5) compares the minimum requirements profile with the capabilities of the machine tool (1), and **in that** the control device (5) commences machining the workpiece (3) only if the capabilities of the machine tool (1) match the minimum requirements profile.

10. Operating method according to one of the above claims, **characterized in that**, during processing of the step sequence (S1-S11), the control device (5) wirelessly reads out component data from a component data carrier (12) assigned to an additional component (2) of the machine tool (1) and takes it into account when processing the step sequence (S1-S11).

11. Operating method according to Claim 10, **characterized in that** the component data includes geometric dimensions of the additional component (2), and **in that** the control device (5) takes account of the dimensions of the additional component (2) during a collision check.

12. Operating method according to Claim 10 or 11, **characterized in that** the component data includes status data such as, for example, operating hours and wear as well as the type and number of machining operations, and **in that** the control device (5) transmits the updated values of said additional data to the component data carrier (12) once the workpiece (3) has been machined.

13. Operating method according to Claim 10, 11 or 12, **characterized in that** the control device (5) also transmits a machine tool identifier and/or a user identifier to the component data carrier (12).

14. Program data carrier having an operating program (7) stored on the program data carrier for implementing an operating method according to one of the above claims.

15. Workpiece data carrier assigned to a workpiece (3), in which a part program (18) for machining the workpiece (3) as well as a description of the workpiece (3) are stored, the description including the original geometric dimensions of the workpiece (3) and/or the current geometric dimensions of the workpiece (3) immediately prior to machining of the workpiece (3) by the machine tool (1), and the workpiece data carrier being adapted to wirelessly communicate the part program and the description of the workpiece (3) to a control device (5).

16. Workpiece data carrier according to Claim 15, **characterized in that** the part program (18) has a number of individual steps (19) to be sequentially executed, and **in that** a program pointer (20) which indicates one of the individual steps (19) is also stored in the workpiece data carrier.

## Revendications

1. Procédé pour faire fonctionner une machine-outil ( 1 ) commandée par un dispositif ( 5 ) de commande,
- dans lequel le dispositif ( 5 ) de commande prend en charge une succession ( S1 à S11 ) de stades et, dans le cadre de la prise en charge de la succession ( S1 à S11 ) de stades, extrait sans fil au moins un sous-programme ( 18 ) et une description d'une pièce ( 3 ), d'un support ( 15 ) de données de pièce associée à la pièce ( 3 ),
- dans lequel la description comprend les dimensions géométriques d'origine de la pièce et/ou les dimensions géométriques actuelles de la pièce ( 3 ), juste avant l'usinage de la pièce ( 3 ) par la machine-outil ( 1 ),
- dans lequel le dispositif ( 5 ) de commande usine la pièce ( 3 ) conformément au sous-programme ( 18 ) extrait.

2. Procédé suivant la revendication 1,
**caractérisé en ce que** le sous-programme ( 18 ) comporte un certain nombre de stades ( 19 ) individuels à exécuter les uns après les autres, **en ce que** le dispositif ( 5 ) de commande extrait du support ( 15 ) de données de pièce également un pointeur ( 20 ) de programme associé à la pièce ( 3 ), **en ce que** le dispositif ( 5 ) de commande commence l'exécution du sous-programme ( 18 ) par un stade ( 18 ) individuel déterminé par le pointeur ( 20 ) de programme et **en ce que** le dispositif ( 5 ) de commande transmet, lorsque l'exécution du sous-programme ( 18 ) est achevée, au support ( 15 ) de données de pièce, un nouveau pointeur de programme de manière à mettre à jour le pointeur ( 20 ) de programme mémorisé dans le support ( 15 ) de données de pièce.

3. Procédé suivant la revendication 2,
**caractérisé en ce que** le support ( 15 ) de données de pièce est associé à plusieurs pièces ( 3 ) de même type et à usiner de la même façon et **en ce que** le dispositif ( 5 ) de commande n'extrait le sous-programme ( 18 ) qu'une fois du support ( 15 ) de données de pièce pour toutes les pièces ( 3 ).

4. Procédé suivant la revendication 1, 2 ou 3,
**caractérisé en ce que** le dispositif ( 5 ) de commande tient compte des dimensions géométriques de la pièce ( 3 ) dans le cadre d'un contrôle de collision.

5. Procédé suivant l'une des revendications précédentes,
**caractérisé en ce que** la description de la pièce ( 3 ) comporte aussi des indications de matériau sur la pièce ( 3 ).

6. Procédé suivant la revendication 5,
**caractérisé en ce que** le dispositif ( 5 ) de commande relève, lors de l'usinage de la pièce ( 3 ), la puissance absorbée réelle par des entraînements de la machine-outil ( 1 ) et la compare à des valeurs de seuil, **en ce que** le dispositif ( 5 ) de commande règle l'usinage ultérieur de la pièce ( 3 ) et détecte par une rupture de pièces si la puissance absorbée réelle dépasse la valeur de seuil et **en ce que** le dispositif ( 5 ) de commande règle au moins l'une des valeurs de seuil en fonction des indications de matériau sur la pièce ( 3 ) .

7. Procédé suivant la revendication 5 ou 6,
**caractérisé en ce que** le dispositif ( 5 ) de commande règle une vitesse d'usinage, à laquelle la pièce est usinée, en fonction des indications de matériau.

8. Procédé suivant l'une des revendications précédentes,
**caractérisé en ce que** le dispositif ( 5 ) de commande extrait aussi une identification de pièce du support ( 15 ) de données de pièce.

9. Procédé suivant l'une des revendications précédentes,
**caractérisé en ce que** le dispositif ( 5 ) de commande extrait du support ( 15 ) de données de pièce une description d'un profil minimum exigé, **en ce que** le dispositif ( 5 ) de commande compare le profil minimum exigé aux possibilités de la machine-outil ( 1 ) et **en ce que** le dispositif ( 5 ) de commande n'enregistre l'usinage de la pièce ( 3 ) que si les possibilités de la machine-outil ( 1 ) correspondent au profil minimum exigé.

10. Procédé suivant l'une des revendications précédentes,
**caractérisé en ce que** le dispositif ( 5 ) extrait sans fil, dans le cadre de la prise en charge de la succession ( S1 à S11 ) de stade d'un support ( 12 ) de données de composant associé à un composant ( 2 ) supplémentaire de la machine-outil ( 1 ), des données de composant et en tient compte dans le cadre de la prise en charge de la succession ( S1 à S11 ) de stades.

11. Procédé suivant la revendication 10,
**caractérisé en ce que** les données de composant contiennent des dimensions géométriques du composant ( 2 ) supplémentaire et **en ce que** le dispositif ( 5 ) de commande tient compte des dimensions du composant ( 2 ) supplémentaire lors d'un contrôle de collision.

12. Procédé suivant la revendication 10 ou 11,
**caractérisé en ce que** les données de composant comprennent des données d'état, comme par exemple une durée de fonctionnement, une usure ou un type et un nombre des opérations d'usinage et ensuite le dispositif ( 5 ) de commande transmet, après l'usinage de la pièce ( 3 ), des valeurs mises à jour de ces données supplémentaires au support ( 12 ) de données de composant.

13. Procédé suivant la revendication 10, 11 ou 12,
**caractérisé en ce que** le dispositif ( 5 ) de commande transmet au support ( 12 ) de données de composant également une identification de machine-outil et/ou une identification de l'utilisateur.

14. Support de données de programme comprenant un programme ( 7 ) de fonctionnement mémorisé sur le support de données de programme pour la mise en oeuvre d'un procédé suivant l'une des revendications précédentes.

15. Support de données de pièce, qui est associé à une pièce ( 3 ) et dans lequel un sous-programme ( 18 ) d'usinage de la pièce ( 3 ) ainsi qu'une description de la pièce ( 3 ) sont mémorisés, la description comprenant les dimensions géométriques d'origine de la pièce ( 3 ) et/ou les dimensions géométriques actuelles de la pièce ( 3 ) juste avant l'usinage de la pièce ( 3 ) par la machine-outil ( 1 ) et le support de données de pièce étant adapté pour communiquer sans fil, à un dispositif ( 5 ) de commande, le sous-programme et la description de la pièce ( 3 ).

16. Support de données de pièce suivant la revendication 15,
**caractérisé en ce que** le sous-programme ( 18 ) comporte un certain nombre de stades ( 19 ) individuels s'effectuant les uns après les autres et **en ce qu'**il est mémorisé aussi dans le support de données de pièce un pointeur ( 20 ) de programme, qui repère l'un des stades ( 19 ) individuels.
